**Europäisches Patentamt**

**European Patent Office**

**Office européen des brevets**

(11) Numéro de publication : **0 054 473**
**B1**

(12) **FASCICULE DE BREVET EUROPÉEN**

(45) Date de publication du fascicule du brevet :
26.06.85

(21) Numéro de dépôt : 81401833.7

(22) Date de dépôt : 04.12.81

(51) Int. Cl.⁴ : **F 16 K 1/226, F 16 K 1/228**

(54) Dispositif d'étanchéité pour vanne.

(30) Priorité : 12.12.80 FR 8026371

(43) Date de publication de la demande :
23.06.82 Bulletin 82/25

(45) Mention de la délivrance du brevet :
26.06.85 Bulletin 85/26

(84) Etats contractants désignés :
BE CH DE GB IT LI NL

(56) Documents cités :
FR-A- 2 056 552
FR-A- 2 253 959
FR-A- 2 300 944
FR-A- 2 326 637
FR-A- 2 331 725
GB-A- 2 001 738

(73) Titulaire : GACHOT S.A.
26 bis, Avenue de Paris
F-95230 Soisy-sous-Montmorency (FR)

(72) Inventeur : Friess, Jean
Auzeville,
F-55120 Clermont en Argonne (FR)

(74) Mandataire : Bouju, André
38 Avenue de la Grande Armée
F-75017 Paris (FR)

## Description

L'invention concerne un dispositif d'étanchéité pour vanne, notamment du type à papillon, correspondant au préambule de la revendication 1 et connu du FR-A-2 331 725 (figures 7, 14 et 16).

Le siège d'un tel dispositif d'étanchéité peut travailler de différentes manières selon son montage. Dans certaines vannes connues, la structure élastique est enserrée dans une gorge ménagée dans le corps. Quand l'obturateur est amené en position fermée, il comprime la section de la structure élastique de façon qu'une aire annulaire de contact d'une certaine largeur existe entre l'obturateur et la tôle roulée.

Dans d'autres vannes connues, on cherche au contraire à provoquer l'enroulement élastique de la tôle roulée quand l'obturateur est amené en position fermée. Ce mode de déformation implique moins de frottements que le précédent entre le siège et l'obturateur lorsqu'on manœuvre ce dernier, et diminue donc le couple de manœuvre nécessaire.

Pour favoriser ce travail à l'enroulement par rapport aux autres modes de déformation moins souhaitables, et pour supprimer aussi les frottements susceptibles d'élever le couple de manœuvre de l'obturateur, des surfaces d'appui et de guidage sont ménagées sur le corps pour la tôle roulée de la structure élastique sensiblement à l'opposé de l'obturateur quand celui-ci est en position de fermeture. Le FR-A-2 331 725 enseigne de réaliser une surface d'appui annulaire concave, de section sensiblement en quart de cercle, qui épouse partiellement le profil de la structure élastique. Ces sièges de vanne, dont le FR-A-2 331 725 donne des exemples non limitatifs, assurent même à haute pression une étanchéité généralement excellente.

Cependant, malgré le mode de déformation choisi, le couple nécessaire pour manœuvrer la vanne lorsqu'elle est soumise à de hautes pressions est relativement élevé. Par ailleurs, le bon fonctionnement de la vanne en ce qui concerne le couple de manœuvre et l'étanchéité, dépend de la température à laquelle la vanne est exposée. En outre, quand la vanne a été soumise aux hautes pressions, elle n'est plus toujours en état d'assurer ensuite l'étanchéité à basse pression.

Le but de l'invention est de remédier à ces inconvénients en réalisant un dispositif d'étanchéité pour vanne qui assure une diminution du couple de manœuvre de la vanne, ainsi qu'une étanchéité encore améliorée en toute circonstance, notamment à haute et à basse pression.

Suivant l'invention, le dispositif d'étanchéité pour vanne est caractérisé en ce qu'en vue de diminuer le couple et réduire les frottements qu'engendre la rotation de l'obturateur, l'élément d'appui présente une surface d'appui pour la structure élastique qui est convexe.

Cette disposition assure une diminution importante du couple de manœuvre de la vanne, notamment à haute pression. Il semble que ces bons résultats soient dus au fait que l'élément d'appui facilite l'enroulement de l'enveloppe en tôle roulée tout en maintenant fermement en place le siège c'est-à-dire en l'empêchant par exemple de fléchir en direction opposée à l'axe de pivotement de l'obturateur. En particulier, l'élément d'appui semble réduire sensiblement les frottements qui s'opposaient à l'enroulement de l'enveloppe en tôle dans le FR-A-2 331 725.

Ces constatations sont surprenantes puisque l'état de la technique constitué par le FR-A-2 331 725 enseignait à l'homme de métier de rechercher au contraire des surfaces d'appui concaves pour guider l'enroulement de l'enveloppe en tôle roulée de la structure d'obturation de la vanne.

Selon un mode de réalisation avantageux de l'invention, l'élément d'appui est une nervure annulaire ménagée sur un épaulement du conduit de passage du fluide.

Cette réalisation particulièrement économique procure à la vanne une douceur de commande très améliorée propice à l'installation de moyens de commande à distance ou de moyens de régulation du débit.

Selon un autre mode de réalisation, l'élément d'appui est un joint torique interposé entre la structure d'obturation et le corps de vanne.

Dans cette version de l'invention, le couple nécessaire pour manœuvrer l'obturateur de la vanne est très réduit, même à température ou pression élevée. En outre, l'obturateur en position de fermeture est étanche sur son siège, quelle que soit la température, ou la pression, même si la vanne a été soumise antérieurement à des pressions très élevées.

Outre l'effet d'enroulement sus-indiqué, l'élément d'appui assure au siège un appui élastique qui accroît sa marge de déformation élastique. L'invention conduit donc à une combinaison d'effets favorables à un couple de manœuvre très réduit.

Encore d'autres modes particuliers de réalisation de l'invention apparaissent dans les revendications dépendantes.

D'autres particularités et avantages de l'invention résulteront encore de la description ci-après.

Aux dessins annexés, donnés à titres d'exemples non limitatifs :

La figure 1 est une vue en coupe longitudinale d'une vanne papillon équipée d'un dispositif d'étanchéité conforme à l'invention ;

la figure 2 est une vue à échelle agrandie d'un détail de la figure 1, montrant plus particulièrement le dispositif d'étanchéité ;

la figure 3 est un graphique permettant de comparer le couple nécessaire pour manœuvrer la vanne avec et sans application de l'invention ;

la figure 4 est un graphique visualisant l'évolution du couple de manœuvre de l'obturateur en fonction de la température, dans le cas de la vanne des figures 1 et 2 ;

les figures 5 à 14   sont des vues analogues à la figure 2 et montrant différents modes de réalisation du dispositif d'étanchéité conforme à l'invention.

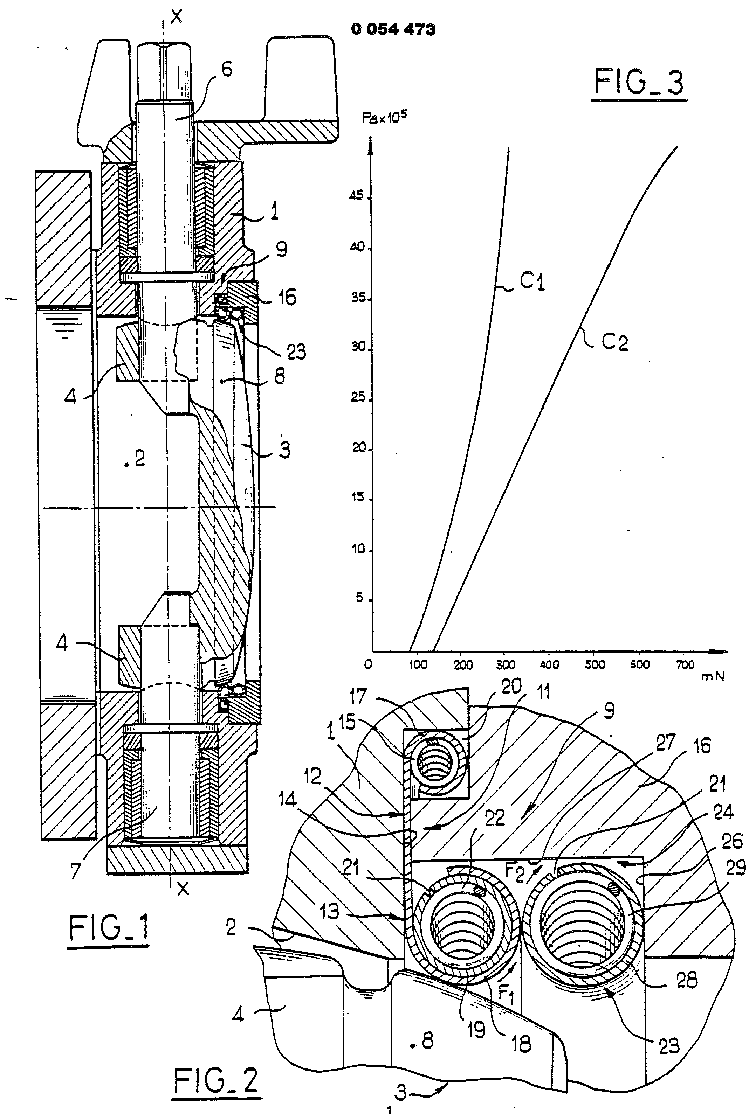

Dans l'exemple représenté à la figure 1, la vanne papillon comprend un corps 1 traversé par un conduit de section sensiblement circulaire 2 pour le passage du fluide. Dans ce conduit est monté un disque obturateur — ou papillon — 3 portant deux oreilles diamétralement opposées 4. L'une de ces oreilles 4 est liée en rotation à un arbre de commande 6 débouchant à l'extérieur du corps 1, tandis qu'un arbre 7 formant pivot, monté en rotation dans le corps 1, est engagé dans l'autre oreille 4.

L'obturateur 3 présente sur son pourtour une zone sphérique annulaire 8, déportée latéralement par rapport à l'axe commun X-X des arbres 6 et 7, et destinée, en position de fermeture de la vanne telle que représentée aux figures, à coopérer avec un dispositif d'étanchéité 9 pour obturer le passage 2.

Comme le montre la figure 2, le dispositif d'étanchéité 9 comprend un siège 11 ayant une aile d'ancrage 12 fixée au corps 1, et une structure annulaire élastique 13, sensiblement torique, qui fait saillie à l'intérieur du passage 2 pour coopérer avec la zone sphérique 8 de l'obturateur 3.

L'aile d'ancrage 12 présente une partie plane, sensiblement radiale, adjacente à l'aile élastique 13, et insérée entre un épaulement 14 du corps 1 et une bague 16 vissée sur le corps 1. L'aile d'ancrage 12 présente, à l'opposé de la structure élastique 13, une partie roulée 17 logée dans un évidement annulaire 20 défini conjointement par l'épaulement 14 du corps 1 et la bague 16. La partie roulée 17, qui prend appui sur trois des quatre faces de l'évidement 20, de section rectangulaire, assure l'étanchéité entre le corps 1 et la bague 16. A l'intérieur de la partie roulée 17 de l'aile d'ancrage 12 est installé un ressort hélicoïdal d'axe circulaire 15.

La structure élastique 13 présente une enveloppe 18 roulée en direction opposée de l'axe X-X à partir de l'aile d'ancrage 12. L'aile d'ancrage 12 et l'enveloppe 18 forment une seule pièce réalisée en tôle de métal élastique tel que l'acier inoxydable. La section de l'enveloppe 18 correspond à un peu plus de trois quarts de cercle. A l'intérieur de l'enveloppe 18, est logée une enveloppe interne 19 réalisée elle aussi en tôle métallique élastique, et roulée de façon à être quasiment refermée sur elle-même, à l'exception d'une étroite fente annulaire 21. Un ressort hélicoïdal 22, d'axe circulaire est à son tour logé dans l'enveloppe interne 19.

Conformément à l'invention, le dispositif d'étanchéité 9 comprend encore un élément d'appui 23 par l'intermédiaire duquel la structure d'obturation 13 du siège principal 11 prend appui contre la bague 16, à l'opposé de l'axe X-X. La structure élastique 13, sensiblement torique et l'élément d'appui 23 sont tous deux montés dans un dégagement 24 ménagé dans la face interne de la bague 16. Ce dégagement annulaire 24 présente une face radiale — ou épaulement — 26 tournée vers le corps 1 et une face cylindrique 27 allant de la face 26 jusqu'au siège 11. L'élément d'appui 23 est intercalé entre la structure d'obturation torique 13 du siège 11 et la face radiale 26 du dégagement annulaire 24. L'élément d'appui 23, qui est du genre d'un joint torique, comprend une enveloppe extérieure 28 tout à fait analogue à l'enveloppe interne 19 du siège 11, excepté que le diamètre de son profil est voisin de celui de l'enveloppe externe 18. L'enveloppe 28 présente une surface extérieure convexe contre laquelle la structure élastique 13, et plus particulièrement l'enveloppe externe 18, prennent appui sur la bague 16 et le corps 1. La fente annulaire 21 de l'enveloppe 28 est de préférence située entre la génératrice circulaire de l'enveloppe 28 la plus proche de la surface cylindrique 27, et la génératrice circulaire de l'enveloppe 28 qui est en contact avec le siège principal 11.

Un ressort hélicoïdal 29 d'axe circulaire, analogue au ressort 22 du siège 11, est logé à l'intérieur de l'enveloppe 28 de l'élément d'appui 23. Le diamètre des spires de ce ressort est voisin du diamètre du profil de l'enveloppe interne 19 du siège 11.

Le siège qui vient d'être décrit fonctionne de la façon suivante :

La partie plane de l'aile d'ancrage 12 assure la fixation du siège 11 au corps, 1, tandis que la partie roulée 17 de l'aile 12 assure l'étanchéité entre le corps 1 et la bague 16, ainsi qu'entre le corps 1 et le siège 11.

En position de fermeture, la zone sphérique 8 de l'obturateur 3 est en contact avec l'enveloppe externe 18 de la structure élastique 13, selon une génératrice de cette dernière située entre l'aile d'ancrage 12 et la génératrice de contact avec l'élément d'appui 23.

Quand on ramène l'obturateur 3 en position de fermeture, l'enveloppe externe 18 du siège 11 tend à s'enrouler sur elle-même (flèche F1 de la figure 2). Ceci entraîne une légère augmentation du diamètre du tore que constitue la structure élastique 13 du siège 11. Par suite, le ressort 22 qu'il renferme s'étire et la fente 21 de l'enveloppe interne 19 tend à diminuer de largeur.

Sans que l'invention soit liée à cette explication, on suppose que les bons résultats que procure le siège qui vient d'être décrit, proviennent de ce que l'enveloppe externe 18, en s'enroulant sur elle-même selon la flèche F1, roule sans glisser sur l'enveloppe externe 28 du siège auxiliaire 23, provoquant chez ce dernier un mouvement tendant à faire diminuer la largeur de la fente 21, selon la flèche F2 de la figure 2. Ainsi, on constate que la déformation du siège 11, qui, au cours de l'ouverture de la fermeture de la vanne s'opère comme exposé dans le FR-A-2 331 725, est grandement facilitée.

Par ailleurs, la présence du siège 23 permet à la vanne d'être exposée à de hautes pressions (par exemple $45 \times 10^5$ Pa) en évitant les déformations plastiques du siège 11, grâce, semble-t-il, à la déformation élastique de l'élément d'appui 23.

Ainsi, une telle vanne peut ensuite être exposée à de basses pressions sans que l'étanchéité soit compromise en position de fermeture. Par ailleurs, il semble que l'élasticité du siège 23 compense les effets de la dilatation thermique de manière à conserver à la vanne son étanchéité et sa douceur de commande quelle que soit la température du fluide qui la traverse.

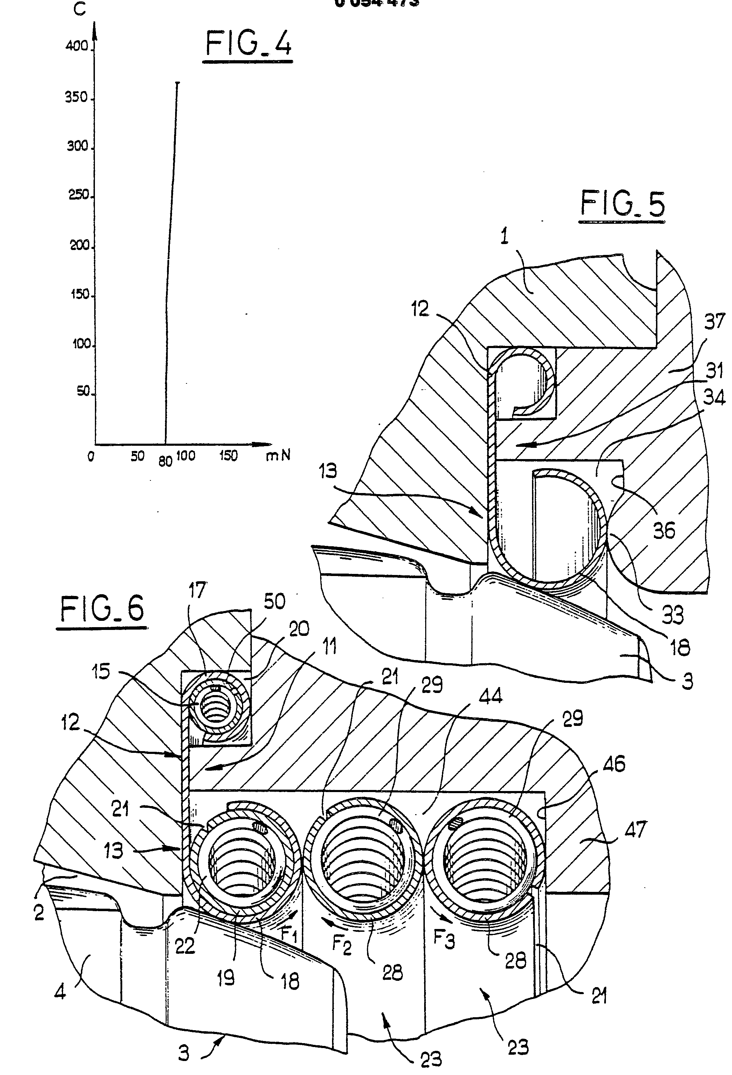

Les bons résultats auxquels conduit l'invention sont visualisés aux graphiques des figures 3 et 4. A la figure 3, on a porté en abscisse le couple en m.N nécessaire pour faire pivoter l'obturateur 3 par action sur l'arbre de commande 6, en fin de fermeture ou en début d'ouverture, et en ordonnée, la pression en Pa × 10⁵ du fluide dont la vanne contrôle le débit. La courbe C1 a été obtenue en effectuant des mesures sur une vanne du genre de celle de la figure 2, de 150 mm de diamètre du conduit 2. La courbe C2 concerne une vanne analogue mais dépourvue de siège 23, et dans laquelle l'enveloppe externe 18 du siège 11 est appuyée directement contre une surface annulaire concave formée dans la bague telle que 16, conformément au FR-A-2 331 725.

Il apparaît qu'à toutes les pressions, le dispositif d'étanchéité conforme à l'invention autorise un couple de manœuvre inférieur à celui obtenu selon l'état de la technique, ce couple étant même réduit approximativement de moitié ou plus pour les pressions supérieures à 45 × 10⁵ Pa.

A la figure 4, on a porté en abscisse le couple en m.N de manœuvre de l'obturateur à partir de l'arbre de commande 6 en fin de fermeture ou en début d'ouverture, et en ordonnée, la température en degrés C du fluide dont la vanne contrôle le débit.

La courbe représentée a été obtenue en effectuant des mesures sur une vanne du genre de celle de la figure 1, dans laquelle le passage 2 avait 150 mm de diamètre. Cette courbe montre que le couple de manœuvre de l'obturateur est sensiblement constant jusqu'à plus de 350 °C.

Le mode de réalisation représenté à la figure 5 est bien adapté pour les vannes de petit diamètre ou les vannes dont le prix de revient doit rester modéré.

Ce dispositif d'étanchéité ne sera décrit qu'en ce qui concerne ses différences par rapport à celui de la figure 2. Il comprend un siège 31 dont l'aile d'ancrage 12 est analogue à celle de la figure 2, et la structure d'obturation 12 est analogue à l'enveloppe externe 18 du siège 2. Par ailleurs, le dispositif d'étanchéité 31 comprend un élément d'appui 33 constitué par une nervure annulaire à section en secteur de cercle, ménagée sur la face radiale 36 de l'évidement annulaire 34 que présente la paroi interne de la bague 37 qui, par ailleurs, joue le même rôle que la bague 16 de la figure 2.

Le mode de réalisation représenté à la figure 6, est au contraire plus particulièrement destiné à des vannes de diamètre relativement important, ou à des vannes de haute qualité dont le prix de revient peut être plus élevé. Le siège 11 est analogue à celui de la figure 2, excepté qu'une enveloppe interne 50 est insérée entre la partie roulée 17 de l'aile d'ancrage 12 et le ressort 15. Le dispositif d'étanchéité comprend deux éléments d'appui 23 montés en série entre la structure élastique 13 du siège 11 et la face radiale du dégagement annulaire 44 ménagé dans la bague 47, qui joue par ailleurs un rôle analogue à celui de la bague 16 de la figure 2. Les éléments 23 sont analogues à l'élément 23 de la figure 2, tandis que la dimension axiale du dégagement 44 est augmentée en conséquence par rapport à celle du dégagement 24 de la figure 2. De préférence, la fente 21 de l'enveloppe externe de l'élément 23 adjacent au siège principal 11 occupe la même position que la fente 21 de la figure 2, tandis que la fente 21 de l'autre élément 23 est située entre les génératrices circulaires de contact avec respectivement le premier élément 23 et la face 46, du côté de l'axe du conduit 2. Dans l'exemple représenté, la fente 21 de cet élément 23 est en position à peu près diamétralement opposée à celle du premier élément 23.

Dans ce dispositif d'étanchéité, l'enroulement selon la flèche F2 du siège 23 adjacent au siège 11, entraîne l'enroulement selon la flèche F3 de l'élément 23, et la fermeture de la fente annulaire 21 de ce dernier.

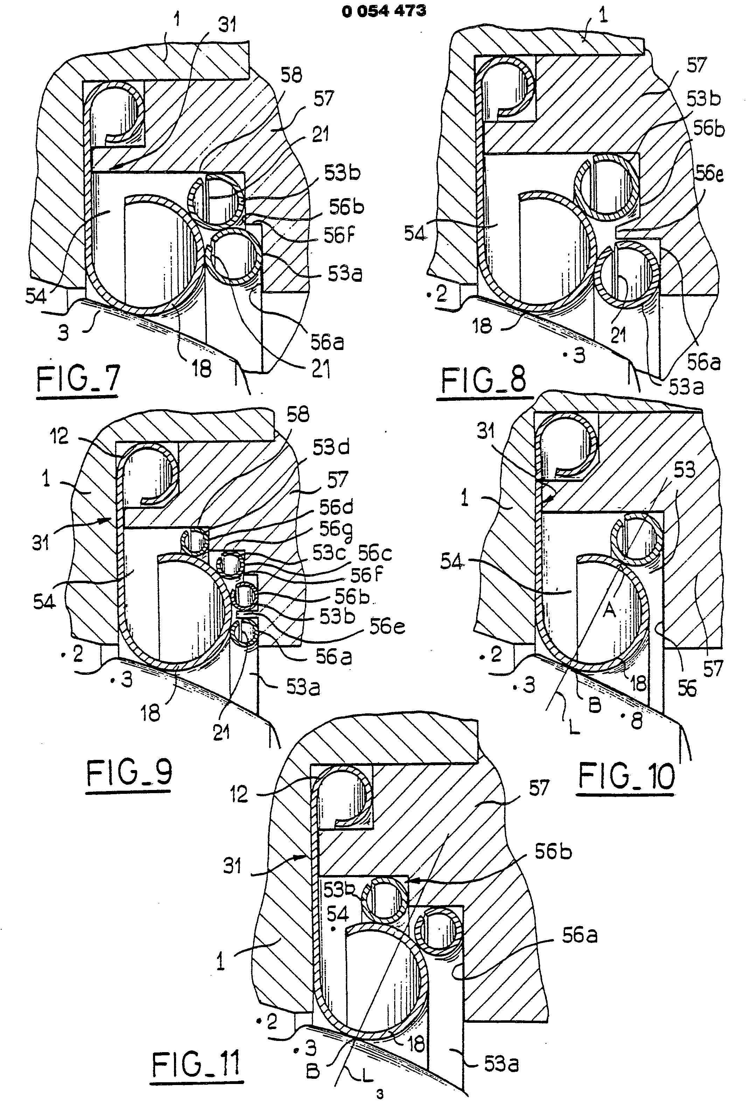

Aux figures 7 à 11, le siège 31 est analogue à celui de la figure 5.

Comme le montre la figure 7, le siège 31 peut prendre appui sur le corps 1 par l'intermédiaire de deux éléments 53a, 53b, montés en parallèle entre l'enveloppe 18 et la bague 57 vissée au corps 1. Les éléments 53a, 53b sont analogues à l'élément 23, sauf que le diamètre de leur section est plus réduit et qu'ils ne renferment pas de ressorts hélicoïdaux.

L'élément 53a présente un diamètre de tore identique à celui de l'enveloppe 18 du siège 31, tandis que l'autre, 53b, est sensiblement plus grand, de sorte qu'il est également légèrement plus proche de l'axe X-X. L'évidement 54 de la bague 57 présente deux faces radiales 56a, 56b, toutes deux dirigées vers l'axe X-X, et séparées par un rebord 56f. Ainsi, les éléments 53a, 53b, qui sont en appui l'un sur l'autre, sont chacun intercalés entre l'enveloppe 18 et l'une des faces 56a ou 56b respectivement, de l'évidement 54.

La fente 21 de l'élément 53a est située entre la génératrice circulaire de contact avec l'enveloppe 18 et la génératrice circulaire de contact avec l'élément 53b, tandis que la fente 21 de l'élément 53b est située entre la génératrice de contact avec l'enveloppe 18 et la génératrice la plus proche de la surface cylindrique 58 de l'évidement 54.

Quand on amène l'obturateur 3 en position de fermeture en appui contre l'enveloppe 18, celle-ci s'enroule provoquant l'enroulement simultané des éléments 53a et 53b dont les fentes annulaires 21 ont tendance à se refermer.

Dans cette réalisation, on parvient à réduire très fortement les frottements qui pourraient s'opposer à l'enroulement de l'enveloppe 18, tout en assurant une très bonne stabilité au siège, ce qui conforte sa résistance à la pression.

Le mode de réalisation de la figure 8 est analogue à celui de la figure 7, excepté que les éléments 53a et 53b ne sont pas en contact l'un avec l'autre. En effet, les diamètres moyens des tores qu'ils constituent, présentent entre eux une différence plus importante que dans la figure 7. Par ailleurs, les surfaces radiales 56a et 56b de l'évidement 54 sont séparées par une nervure 56e assurant le centrage du siège 53a par rapport à l'axe du conduit 2.

Dans cet exemple, la fente 21 du siège 53a est située entre la génératrice annulaire de contact avec l'enveloppe 18 et la génératrice la plus proche de la nervure 56e.

Le mode de réalisation de la figure 9 est plus particulièrement destiné à des vannes de grand diamètre de passage, par exemple 1 m ou plus. Cet exemple est analogue à celui de la figure 8, sauf que ce sont quatre éléments toriques 53a, 53b, 53c, 53d qui sont interposés entre l'enveloppe 18 et la bague 57 qui est vissée au corps 1.

L'appui des éléments 53a à 53d sur la bague 57, a lieu sur quatre surfaces annulaires radiales 56a, 56b, 56c, 56d de l'évidement 54, dirigées vers l'axe X-X. Les surfaces 56a et 56b sont alignées et séparées par une nervure 56e qui assure le centrage du siège 53a par rapport à l'axe du conduit 2. Les surfaces 56b, 56c et 56d, qui sont décalées en gradins, sont séparées par des rebords 56f et 56g qui assurent respectivement le centrage des éléments 53b et 53c. L'élément 53d qui a le plus grand diamètre, est centré par le fond 58 de l'évidement 54. Les éléments 53a à 53d ont leur fente 21 située entre la génératrice circulaire de contact avec l'enveloppe 18 et, selon les cas, la nervure 56e, les rebords 56f, 56g ou la surface cylindrique 58.

Ainsi, quand l'enveloppe 18 s'enroule sous l'effet de la fermeture de l'obturateur 3, chaque élément 53a, 53b ou 53d se referme légèrement.

Dans l'exemple de la figure 10, l'enveloppe 18 du siège 31 est supportée par un seul siège 53 analogue au siège 53a ou 53b de la figure 7. Ce siège 53 est comme dans les figures 7 à 9 précédentes, en appui contre une surface radiale 56 du dégagement 54.

En outre, le siège 53 est monté de telle manière que, en coupe comme représenté à la figure 10, son point de contact A avec l'enveloppe 18, soit situé sur la perpendiculaire L aux surfaces de la zone sphérique 8 et de l'enveloppe 18, issue du point B de contact entre ces deux surfaces.

L'exemple de la figure 11 est voisin de celui de la figure 10, excepté que le dispositif d'étanchéité comprend ici deux éléments d'appui 53a, 53b répartis de part et d'autre de la ligne L. Chaque élément 53a, 53b est en appui contre la bague 57 qui présente à cet effet deux surfaces radiales planes 56a, 56b.

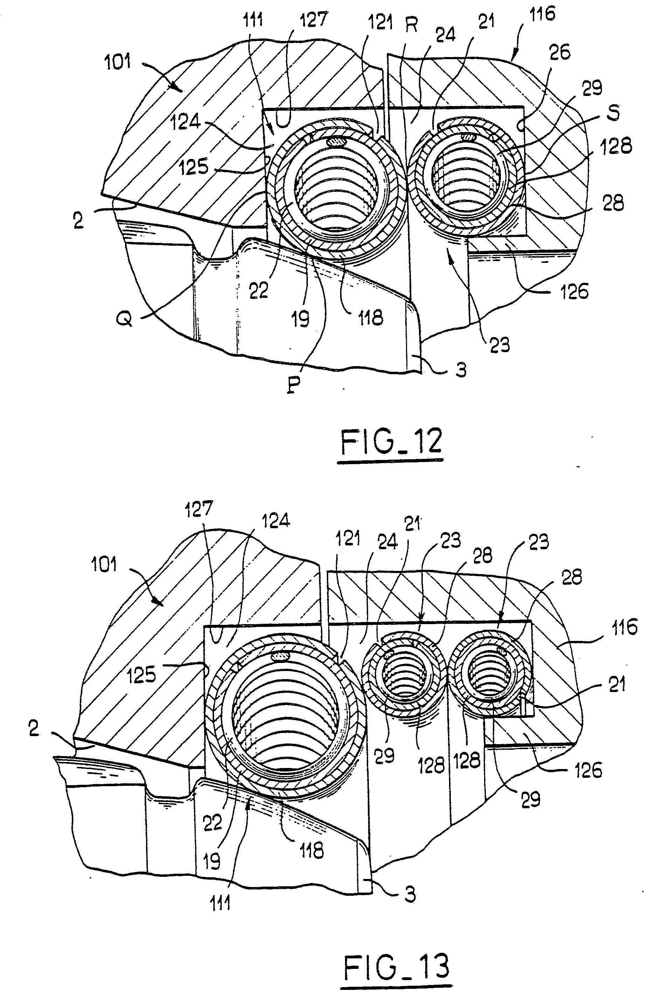

Dans l'exemple de la figure 12, le siège 111 comprend uniquement une structure élastique analogue à celle de la figure 2 sauf que l'enveloppe externe 118 est sensiblement torique et entièrement refermée sur elle-même à l'exception d'une fente annulaire 121. Le siège 111 est monté dans un dégagement annulaire 124 que présente le corps 101 en prolongement du dégagement 24 de la bague 116. L'enveloppe externe 118 est appuyée de façon étanche contre la paroi radiale plane 125 du dégagement 124, qui est située sensiblement à l'opposé de l'élément d'appui 23. Par contre, un espace peut subsister entre l'enveloppe 118 et la paroi cylindrique 127 du dégagement 124.

L'élément d'appui 23 est analogue à celui de la figure 2, excepté que son profil peut être de diamètre légèrement réduit et qu'une enveloppe interne 128 est interposée entre l'enveloppe externe 28 et le ressort 29.

Un rebord 126, qui sépare du conduit 2 la face plane 26 du dégagement 24 peut renforcer le positionnement de l'élément d'appui 23.

La fente 21 est disposée comme dans la réalisation de la figure 2, et la fente 121 du siège 111 est disposée de façon sensiblement symétrique à la fente 21 par rapport au plan de contact entre le siège 111 et l'élément 23.

L'enroulement de l'enveloppe externe 118, qui provoque une variation de la largeur de la fente 121, entraîne l'enroulement de l'enveloppe externe 28 et la diminution de largeur de la fente 21. Le siège 111, qui n'est en appui que sur la face plane 125 et l'élément d'appui 23, se centre de lui-même sur l'obturateur 3 quand celui-ci arrive en position de fermeture, ce qui réduit les risques de fuite localisée à une certaine partie de la périphérie de l'obturateur.

Dans cette version, l'invention permet également d'adoucir le couple de manœuvre et d'augmenter les performances d'étanchéité de la vanne. Cette étanchéité s'effectue, avec l'obturateur 3, selon la ligne P de contact entre l'obturateur 3 et l'enveloppe 118, et avec le corps 101, selon la ligne Q de contact entre l'enveloppe 118 et la face radiale 125 du dégagement 124, ainsi que selon la ligne R de contact élastique entre les enveloppes 118 et 28, et selon la ligne S de contact entre l'enveloppe 28 et la face 29 du dégagement 24.

Un joint torique addtionnel, non représenté, d'un genre connu, peut en outre être interposé entre le corps 101 et la bague 116.

La version de la figure 13 est analogue à celle de la figure 12, excepté que le dégagement annulaire 24 de la bague 116 renferme deux éléments d'appui 123 disposés comme dans la réalisation de la figure 6.

La présente version est plus particulièrement destinée à des vannes de grand diamètre et/ou de haute qualité.

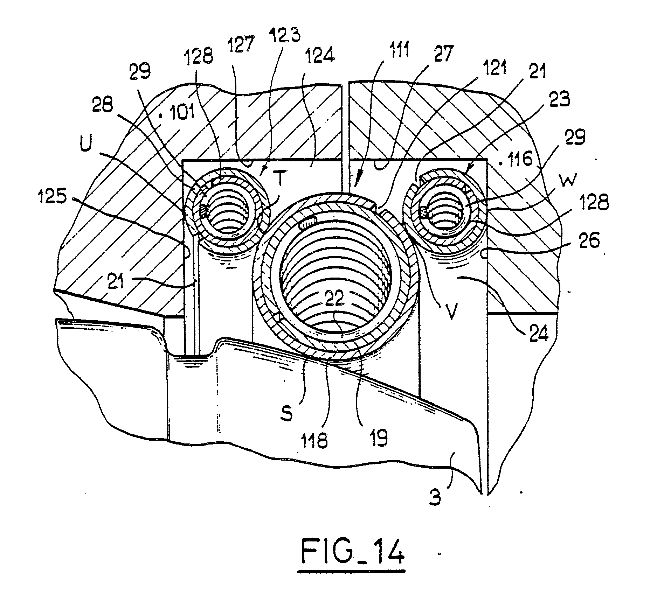

La réalisation de la figure 14 ne sera décrite qu'en ce qui concerne ses différences par rapport à la figure 12.

L'élément d'appui 23 est de plus grand diamètre d'anneau et de plus petit diamètre de profil que celui de la figure 12, et les surfaces cylindriques 27 et 127 des dégagements 24 et 124 sont de plus grand diamètre que celles de la figure 12. Ainsi, le siège principal 111 est en appui oblique contre la paroi radiale 26 du dégagement 24.

Un second élément d'appui 123 est interposé entre le siège 111 et la paroi radiale 125 du dégagement 124, de façon symétrique à l'élément 23 par rapport au plan du siège 111.

L'élément 123 est analogue à l'élément excepté que la fente 21 concerne la partie de l'enveloppe externe 28 tournée vers le conduit 2 et s'étendant entre la ligne T de contact avec le siège 111 et la ligne U de contact avec la face 125.

En position de fermeture de la vanne, l'étanchéité entre le siège 111'et le corps 101 s'effectue selon les lignes T et U ainsi que selon les lignes homologues V et W concernant l'élément 23. L'étanchéité entre le siège 111 et l'obturateur 3 résulte de la ligne de contact S entre ces deux pièces.

Au cours de la manœuvre de l'obturateur 3, ce mode de réalisation du dispositif d'étanchéité permet également au siège 111 de s'enrouler et de se dérouler avec les frottements réduits.

On voit donc que l'invention se prête à de nombreuses applications, et le choix entre un mode de réalisation ou l'autre pourra s'effectuer en fonction du compromis recherché entre la pression que peut supporter la vanne et la douceur de commande souhaitée sur l'arbre de commande 6. D'autres facteurs peuvent également être considérés, tels que prix de revient, ou diamètre d'écoulement du fluide dans la vanne.

Le travail à l'enroulement de la structure d'obturation favorisé par l'élément d'appui conforme à l'invention, permet de limiter la pression de contact notamment entre le siège et l'obturateur. Les déformations du siège et du ou des éléments d'appui restent élastiques, ce qui confère à la vanne sa bonne résistance aux variations de température et de pression.

Les avantages auxquels conduit l'invention sont surprenants car l'homme du métier est induit à penser que la pression de contact élevée qui prend naissance entre deux surfaces convexes telles que celles de l'aile élastique et de l'élément d'appui conformes à l'invention est de nature à rendre très difficile l'enroulement du siège quand l'obturateur atteint ou quitte la position de fermeture, donc à augmenter le couple nécessaire pour manœuvrer la vanne.

Comme variantes, on peut munir d'un ressort hélicoïdal et éventuellement d'une enveloppe interne les ailes d'ancrage, structures élastiques ou joints auxiliaires dans les exemples où ceux-ci ne comprennent qu'une simple enveloppe en tôle roulée.

D'autre part, le dispositif d'étanchéité conforme à l'invention est applicable à tout type de vanne pouvant recevoir un siège du genre revendiqué.

### Revendications

1. Dispositif d'étanchéité pour vanne, comprenant un siège métallique (11 ; 111) ayant une structure annulaire élastique (13) présentant une enveloppe (18 ; 118) en tôle roulée qui est sensiblement torique et qui est destinée à être en contact avec l'obturateur (3) de la vanne quand celui-ci est en position de fermeture, le dispositif comprenant en outre des moyens (14 ; 125) pour assurer l'étanchéité entre le siège (11, 111) et le corps de vanne (1, 101), et au moins un élément d'appui (23 ; 33 ; 53 ; 53a, 53b, 53c, 53d ; 123) qui permet à la structure élastique (13) du siège (11, 111) de prendre appui par sa surface torique sur le corps de vanne (1, 101) quand l'obturateur (3) est en position de fermeture, ce dispositif étant caractérisé en ce qu'en vue de diminuer le couple et réduire les frottements qu'engendre la rotation de l'obturateur, l'élément d'appui (23 ; 33 ; 53 ; 123) présente une surface d'appui pour la structure élastique (13) qui est convexe.

2. Dispositif conforme à la revendication 1, caractérisé en ce que l'élément d'appui est une nervure annulaire (33) ménagée sur un épaulement du conduit de passage du fluide (2).

3. Dispositif conforme à la revendication 2, caractérisé en ce que la section de cette nervure (33) est délimitée par un secteur de cercle.

4. Dispositif conforme à la revendication 1, caractérisé en ce que l'élément d'appui (23 ; 53 ; 53a à 53d ; 123) est du genre d'un joint torique, et est interposé entre la structure élastique (13) et une face d'appui (26 ; 46 ; 56a, 56b, 56d) rendue solidaire du corps de vanne (1, 101).

5. Dispositif conforme à la revendication 4, caractérisé en ce que l'élément d'appui (23 ; 53a à 53d ; 123) présente une enveloppe (28) tôle roulée déformable par enroulement élastique.

6. Dispositif conforme à la revendication 5, caractérisé en ce que les deux bords annulaires de la tôle roulée sont séparés par une fente annulaire (21).

7. Dispositif conforme à l'une des revendications 5 ou 6, caractérisé en ce que l'aile de l'enveloppe (28) partant de la ligne de contact avec le siège (11 ; 111) jusqu'au bord de l'enveloppe (28) situé dans la direction d'enroulement de cette enveloppe (28) est libre de tout contact avec le corps (1).

8. Dispositif conforme à l'une des revendications 4 à 7, caractérisé en ce que l'élément d'appui (23 ; 123) présente un diamètre d'anneau voisin de celui de la structure élastique (13) du siège (11), et un profil de diamètre voisin de celui du profil de la structure (13).

9. Dispositif conforme à l'une des revendications 1 à 7, caractérisé en ce que l'élément d'appui (53) est disposé de manière que, en coupe selon un plan passant par l'axe du conduit (2) qui traverse le corps de vanne (1), son point de contact (A) avec la structure élastique (13) soit situé sur la ligne (L) perpendiculaire aux surfaces de l'aile élastique (13) et de l'obturateur (3) en leur point de contact (B).

10. Dispositif conforme à l'une des revendications 4 à 9, caractérisé en ce qu'un second élément d'appui (23) est interposé entre le premier élément d'appui (23) et la surface d'appui (26 ; 46) rendue solidaire du corps de vanne (1 ; 101).

11. Dispositif conforme à la revendication 10, caractérisé en ce que le second élément d'appui (23) présente un diamètre d'anneau et un diamètre de sa section droite égaux à ceux du premier élément d'appui (23).

12. Dispositif conforme à l'une des revendications 1 à 11, caractérisé en ce qu'un second élément d'appui (53b) est interposé entre la structure élastique (13) et une surface d'appui (56b) rendue solidaire du corps de vanne (1).

13. Dispositif conforme à la revendication 12, caractérisé en ce que le second élément d'appui (53b) est en appui sur le premier élément d'appui (53a).

14. Dispositif conforme à l'une des revendications 12 ou 13, caractérisé en ce que les deux éléments d'appui (53a, 53b) sont, en coupe, répartis de part et d'autre de la ligne perpendiculaire (L) à la surface de la structure élastique (13) et de l'obturateur (3) au point de contact (B) de ces derniers.

15. Dispositif conforme à l'une des revendications 1 à 8, caractérisé en ce que le siège (111) est du genre d'un joint torique, en ce qu'il est monté en appui uniquement contre l'élément d'appui (23) et contre une face radiale (125) ménagée sur le corps (101) à l'opposé de l'élément d'appui (23).

16. Dispositif conforme à la revendication 15, caractérisé en ce que le siège (111) prend appui sur la face radiale (125) du corps (101) par l'intermédiaire d'un second élément d'appui (123).

17. Dispositif conforme à l'une des revendications 1 à 16, caractérisé en ce qu'une série d'éléments d'appui (53a à 53d) sont interposés chacun entre la structure élastique (13) et une surface (56a à 56d) rendue solidaire du corps de vanne (1).

**Claims**

1. A sealing device for a valve, comprising a metallic seat (11 ; 111) having a resilient annular structure (13) comprising a shell (18 ; 118) of rolled sheet-metal, which is substantially toric and which is intended to be in contact with the valve element (3) when the latter is in the closed position, the device further comprising means (14 ; 125) to provide sealing-tightness between the seat (11, 111) and the valve body (1, 101), and at least one bearing member (23 ; 33 ; 53 ; 53a ; 53b ; 53c ; 53d ; 123) which enables the resilient structure (13) of the seat (11, 111) to bear by its toric surface on the valve body (1, 101) when the valve element (3) is in the closed position, the device being characterised in that in order to decrease the torque and to reduce the friction produced by rotation of the valve element, the bearing member (23 ; 33 ; 53 ; 123) has a convex bearing surface for the resilient structure (13).

2. A device according to claim 1, characterised in that the bearing member is an annular rib (33) formed on a shoulder of the fluid passageway (2).

3. A device according to claim 2, characterised in that the section of said rib (33) is defined by a circle sector.

4. A device according to claim 1, characterised in that the auxiliary seat (23 ; 53 ; 53a ; to 53d ; 123) is of the O-ring type and is interposed between the resilient structure (13) and a bearing face (26 ; 46 ; 56a ; 56b, 56d) rigidly secured to the valve body (1, 101).

5. A device according to Claim 4, characterised in that the bearing member (23 ; 53a to 53d, 123) has an outer wall (28) of rolled sheet metal deformable by resilient coiling.

6. A device according to claim 5, characterised in that the two annular edges of the rolled metal sheet are separated by an annular slit (21).

7. A device according to claim 5 or 6, characterised in that the flange of the outer wall (28) extending from the line of contact with the main seat (11 ; 111) up to the edge of the outer wall (28) in the direction of coiling of said outer wall (28) is free from any contact with the body (1).

8. A device according to any one of claims 4 to 7, characterised in that the bearing member (23 ; 123) has a ring diameter close in value to that of the resilient structure (13) of the seat (11) and a profile of a diameter close to that of the profile of the structure (13).

9. A device according to any one of claims 1 to 7, characterised in that the bearing member (53) is so disposed that, in section along a plane passing through the axis of the passageway (2) which extends through the valve body (1), its point of contact (A) with the resilient structure (13) is situated on the line (L) perpendicular to the surfaces of the resilient flange (13) and of the valve element (3) at their point of contact (B).

10. A device according to any one of claims 4 to 9, characterised in that a second bearing member (23) is interposed between the first bearing member (23) and the bearing surface (26 ; 46) rigidly secured to the valve body (1 ; 101).

11. A device according to claim 10, characterised in that the second bearing member (23) has a ring diameter and a cross-sectional diameter equal to those of the first auxiliary seat (23).

12. A device according to any one of claims 1 to 11, characterised in that a second bearing member (53b) is interposed between the resilient structure (13) and a bearing surface (56b) rigidly secured to the valve body (1).

13. A device according to claim 12, characterised in that the second bearing member (53b) bears on the first bearing member (53a).

14. A device according to claim 12 to 13, characterised in that the two bearing members (53a, 53b) considered in section are located on either side of the line (L) perpendicular to the surface of the resilient structure (13) and of the valve element (3) at the point of contact (B) of the latter.

15. A device according to any one of claims 1 to 8, characterised in that the seat (111) is of the O-ring seal type, is mounted so as to bear only against the bearing member (23) and against a radial surface (125) formed on the body (101) at the end remote from the bearing member (23).

16. A device according to claim 15, characterised in that the seat (111) bears on the radial surface (125) of the body (101) by means of a second bearing member (123).

17. A device according to any one of claims 1 to 16, characterised in that a series of bearing members (53a to 53d) are each interposed between the resilient structure (13) and a surface (56a to 56d) rigidly secured to the valve body (1).

**Patentansprüche**

1. Dichtungsvorrichtung für einen Schieber, mit einem metallischen Sitz (11 ; 111), der eine ringförmige elastische Struktur (13) besitzt, welche eine Hülle (18 ; 118) aus gerolltem Blech aufweist, die im wesentlichen torusförmig und dazu bestimmt ist, mit dem Absperrelement (3) des Schiebers in Berührung zu kommen, wenn dieses in der Schließstellung ist, wobei die Vorrichtung ferner Mittel (14 ; 125) enthält, um die Dichtheit zwischen dem Sitz (11, 111) und dem Körper des Schiebers (1, 101) zu gewährleisten, und wenigstens ein Abstützelement (23 ; 33 ; 53 ; 53a, 53b, 53c, 53d ; 123) umfaßt, welches es der elastischen Struktur (13) des Sitzes (11, 111) gestattet, sich mit seiner torusförmigen Oberfläche auf dem Körper des Schiebers (1, 101) abzustützen, wenn das Absperrelement (3) in Schließstellung ist, wobei diese Vorrichtung dadurch gekennzeichnet ist, daß zur Verminderung des Drehmomentes und Reduzierung der Reibung, welche durch die Drehung des Absperrelementes erzeugt wird, das Abstützelement (23 ; 33 ; 53 ; 123) eine Abstützoberfläche für die elastische Struktur (13) aufweist, welche konvex ist.

2. Vorrichtung nach Anspruch 1, dadurch gekennzeichnet, daß das Abstützelement eine ringförmige Rippe (33) ist, welche an einer Schulter der Durchgangsleitung für das fluide Medium (2) angebracht ist.

3. Vorrichtung nach Anspruch 2, dadurch gekennzeichnet, daß der Querschnitt dieser Rippe (33) durch einen Kreissektor begrenzt ist.

4. Vorrichtung nach Anspruch 1, dadurch gekennzeichnet, daß das Abstützelement (23 ; 53 ; 53a bis 53d ; 123) vom Typ einer torusförmigen Dichtung ist sowie zwischen der elastischen Struktur (13) und einer Abstützfläche (26 ; 46 ; 56a, 56b, 56d) angeordnet ist, welche fest mit dem Körper des Schiebers (1, 101) verbunden ist.

5. Vorrichtung nach Anspruch 4, dadurch gekennzeichnet, daß das abstützelement (23 ; 53a bis 53d ; 123) eine Hülle (28) als gerolltes Blech aufweist, das durch elastisches Aufrollen deformierbar ist.

6. Vorrichtung nach Anspruch 5, dadurch gekennzeichnet, daß die zwei Ringränder des gerollten Bleches durch einen ringförmigen Schlitz (21) getrennt sind.

7. Vorrichtung nach einem der Ansprüche 5 und 6, dadurch gekennzeichnet, daß der Flüger der Hülle (28), welcher von der Kontaktlinie mit dem Sitz (11 ; 111) bis zum Rand der Hülle (28), welcher in Richtung des Aufrollens dieser Hülle (28) liegt, ausgeht, von jeder Berührung mit dem Körper (1) frei ist.

8. Vorrichtung nach einem der Ansprüche 4 bis 7, dadurch gekennzeichnet, daß das Abstützelement (23 ; 123) einen Ringdurchmesser aufweist, der etwa gleich dem der elastischen Struktur (13) des Sitzes (11) ist, und ein Profil von einem Durchmesser aufweist, das etwa gleich dem des Profils der Struktur (13) ist.

9. Vorrichtung nach einem der Ansprüche 1 bis 7, dadurch gekennzeichnet, daß das Abstützelement (53) derart angeordnet ist, daß im Schnitt längs einer durch die Achse der den Körper des Schiebers (1) durchquerenden Leitung (2) verlaufenden Ebene sein Kontaktpunkt (A) mit der elastischen Struktur (13) auf der Linie (L) liegt, welche senkrecht zu den Oberflächen des elastischen Flügels (13) und des Absperrelementes (3) in ihrem Kontaktpunkt (B) verläuft.

10. Vorrichtung nach einem der Ansprüche 4 bis 9, dadurch gekennzeichnet, daß ein zweites Abstützelement (23) zwischen dem ersten Abstützelement (23) und der Abstützoberfläche (26 ; 46), welche fest mit den Körpern des Schiebers (1 ; 101) verbunden ist, angeordnet ist.

11. Vorrichtung nach Anspruch 10, dadurch gekennzeichnet, daß das zweite Abstützelement (23) einen Ringdurchmesser und einen Durchmesser des senkrechten Querschnittes aufweist, die gleich denjenigen des ersten Abstützelementes (23) sind.

12. Vorrichtung nach einem der Ansprüche 1 bis 11, dadurch gekennzeichnet, daß ein zweites Abstützelement (53b) zwischen der elastischen Struktur (13) und einer Abstützoberfläche (56b) angeordnet ist, welche fest mit dem Körper des Schiebers (1) verbunden ist.

13. Vorrichtung nach Anspruch 12, dadurch gekennzeichnet, daß das zweite Abstützelement (53b) sich auf dem ersten Abstützelement (53a) abstützt.

14. Vorrichtung nach Anspruch 12 oder 13, dadurch gekennzeichnet, daß die zwei Abstützelemente (53a, 53b) im Schnitt auf der einen bzw. anderen Seite der Linie (L) verteilt sind, welche senkrecht zu der Oberfläche der elastischen Struktur (13) und des Absperrelementes (3) im Kontaktpunkt (B) derselben verläuft.

15. Vorrichtung nach einem der Ansprüche 1 bis 8, dadurch gekennzeichnet, daß der Sitz (111) vom Typ einer torusförmigen Dichtung ist und daß er mit Abstützung allein gegen das Abstützelement (23) und gegen eine radiale Fläche (125) eingebaut ist, welche an dem Körper (101) gegenüber dem Abstützelement (23) angebracht ist.

16. Vorrichtung nach Anspruch 15, dadurch gekennzeichnet, daß der Sitz (111) sich auf der radialen Fläche (125) des Körpers (101) über ein zweites Abstützelement (123) abstützt.

17. Vorrichtung nach einem der Ansprüche 1 bis 16, dadurch gekennzeichnet, daß eine Reihe von Abstützelementen (53a bis 53d) jeweils zwischen der elastischen Struktur (13) und einer Oberfläche (56a bis 56d) angeordnet sind, welche fest mit dem Körper des Schiebers (1) verbunden ist.

**0 054 473**

FIG_3

FIG_1

FIG_2

0 054 473

FIG. 4

FIG. 5

FIG. 6

FIG_7

FIG_8

FIG_9

FIG_10

FIG_11

FIG_12

FIG_13

## FIG_14